# EUROPÄISCHE PATENTANMELDUNG

(11) **EP 1 216 740 A1**
(43) Veröffentlichungstag der Anmeldung: **26.06.2002**
(21) Anmeldenummer: 01129591.2
(22) Anmeldetag: 12.12.2001
(51) Int. Cl.: B01D 29/21, B01D 29/96, B01D 35/14, B01D 27/08, B01D 27/10

(54) **Filteranordnung für Flüssigkeiten**

(30) Priorität: 22.12.2000 DE 10064482
(71) Anmelder: FILTERWERK MANN & HUMMEL GMBH, 71638 Ludwigsburg (DE)
(72) Erfinder: Jainek, Herbert, 74074 Heilbronn (DE)
(74) Vertreter: Voth, Gerhard

(57) **Zusammenfassung**

Die Erfindung betrifft eine Filteranordnung für Flüssigkeiten mit einem Filterelement(6), das während der Montage der Filteranordnung (1) axial in ein Filtergehäuse (4) einführbar ist, wobei das Filterelement (6) nach der Montage den Verschluss einer Rücklaufvorrichtung mindestens für die zu filternde Flüssigkeit mit mindestens einer Dichtung (12) vor dem Rücklaufkanal bewirkt. Die Vorrichtung ist so gestaltet, dass im Verlauf des axialen Herauszeihens des Filterelements (6) zunächst eine erste Dichtung (12;20;30;40) für den Rücklauf der zu filternden Flüssigkeit freigebbar ist und im Verlauf des weiteren axialen Herauszeihens des Filterelements (6) eine zweite Dichtung (18;22;41) für den Rücklauf der gefilterten Flüssigkeit freigebbar ist.

## Beschreibung

### Stand der Technik

Die Erfindung betrifft eine Filteranordnung für Flüssigkeiten, insbesondere für Öl oder Kraftstoff in einer Brennkraftmaschine, nach dem Oberbegriff des Hauptanspruchs.

Es ist bekannt, bei einem Ölfilter für die Reinigung des Öls einer Brennkraftmaschine ein metallfreies Filterelement zu verwenden. Dieses Filterelement wird in ein Gehäuse eingeschoben und das Gehäuse wird mit einem Deckel verschlossen. In dem Gehäuse ist zur Verringerung des Ölrücklaufs beim Stillstand der Brennkraftmaschine üblicherweise ein Rücklaufsperrventil vorgesehen. Dieses Rücklaufsperrventil muss in einem separaten Montageschritt in das Gehäuse eingesetzt werden und besteht üblicherweise aus einem Ventilteller, der mit einer Feder vorgespannt ist, einer Ventilkrone und einem Ventilsitz. Das Ventil wird in das Gehäuse eingeschraubt oder eingesteckt, wobei es in der Regel nachteilig ist, dass dieses Bauelement aufwendig zu montieren ist.

Beispielsweise ist in der DE 42 40 656 C2 eine Filteranordnung für Kraft- und/oder Schmierstoffe eines Verbrennungsmotors beschrieben, bei der ein Bodenablauf vorgesehen ist, der durch eine Endscheibe des Filterelementes beim Einsetzen des Filterelements verschlossen wird. Dieser Ablauf wird geöffnet, sobald das Filterelement entnommen wird, so dass das Öl durch diese Ablaufbohrung in einen Auffangbehälter abfließen kann. Es ist aus diesem Stand der Technik auch ein Rücklaufsperrventil zu entnehmen, welches aus einer Metallplatte besteht, die von einer Feder beaufschlagt ist und die Rohölzulaufbohrung abdichtet. Hierzu sind verschiedene Ventilkomponenten erforderlich.

### Aufgabenstellung

Der Erfindung liegt die Aufgabe zugrunde, eine Filteranordnung nach dem Oberbegriff des Hauptanspruchs auf einfache Weise so fortzubilden, dass ein einfaches Öffnen und Sperren des Rücklaufs der Flüssigkeit in der Filteranordnung, insbesondere bei der Wartung der Filteranordnung mit einem Austausch des Filterelements, ohne Aufwand möglich ist.

### Vorteile der Erfindung

Die eingangs angegebene Filteranordnung für Flüssigkeiten, insbesondere Kraft- und/oder Schmierstoffe für einen Verbrennungsmotor in einem Kraftfahrzeug, mit einem Filterelement, das während der Montage des Filterelements axial in ein Filtergehäuse einführbar ist, ist so ausgebildet, dass das Filterelement nach der Montage den Verschluss einer Rücklaufvorrichtung mindestens für die zu filternde Flüssigkeit mit mindestens einer Dichtung vor dem Rücklaufkanal bewirkt. Erfindungsgemäß ist die Rücklaufvorrichtung in vorteilhafter Weise so gestaltet, dass im Verlauf des axialen Herauszeihens des Filterelements zunächst eine erste Dichtung für den Rücklauf der zu filternden Flüssigkeit freigebbar ist und im Verlauf des weiteren axialen Herauszeihens des Filterelements eine zweite Dichtung für den Rücklauf der gefilterten Flüssigkeit freigegeben wird.

Die erfindungsgemäßen Dichtungen sind bei dem zylindrischen Aufbau der Filteranordnung in der Regel Dichtscheiben oder Dichtringe, die in Verbindung mit Teilen der Gehäuseinnenwand im Prinzip ein einfaches Rücklaufsperrventil bildet. Die Dichtscheiben oder 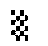 ringe sind mit dem Filterelement fest verbunden, so dass beim Austausch des Filterelementes aufgrund einer regelmäßigen Wartung auch diese Dichtungen mit ausgetauscht werden. Dies hat den Vorteil, dass das erfindungemäße Rücklaufsperrventil nur ein geringes Alterungsverhalten aufweist.

Bevorzugt ist die erste Dichtung am Filterelement derart angeordnet, dass sie in einem vorgegebenen axialen Bewegungsbereich dichtend an einer Gehäusewand anliegt. Die zweite Dichtung ist in vorteilhafter Weise am Filterelement derart angeordnet, dass sie auch in einem vorgegebenen axialen Bewegungsbereich dichtend an einer sich axial erstreckenden Gehäusewand anliegt, wobei der Bewegungsbereich für die zweite Dichtung jedoch länger ist als der erste. Somit ist sichergestellt, dass zunächst die ungefilterte Flüssigkeit, z.B. Rohöl, und dann anschließend die gefilterte Flüssigkeit, z.B. Reinöl, abfließen kann.

Die in der Regel radialen Flächen der zweiten Dichtung liegen hier an einem Standrohr der Filteranordnung an und bilden über den Kontakt mit dem Mittelrohr die Dichtung zwischen ungefilterten Rohflüssigkeitsseite und der Reinflüssigkeitsseite. Mit dem Standrohr kann bei einem Motorstillstand verhindert werden, dass abhängig von der Höhe des Standrohrs bei einer Leckage in den Lagen des Filterelements auf der Reinseite das Ölniveau bei einem Motorstillstand im Filter absinkt. Zusätzlich kann hier auch noch ein Überdruckventil in der Filteranordnung vorgesehen werden, welches die Aufgabe hat, bei einem erhöhten Differenzdruck zwischen Rohölseite und Reinölseite einen Bypass zu öffnen.

Gemäß einer ersten vorteilhaften Ausführungsform ist der erste Bewegungsbereich durch einen axialen Fort, an dem die erste Dichtung anliegt, im Gehäuse zwischen dem Zulauf der zu filternden Flüssigkeit und dem Rücklaufkanal gebildet.

Nach einer zweiten Ausführungsform ist der erste Bewegungsbereich durch eine sich axial erstreckende erste Dichtung gebildet, die an einem sich axial erstreckenden Fortsatz im Gehäuse zwischen dem Zulauf der zu filternden Flüssigkeit und dem Rücklaufkanal anliegt.

Weiterhin ist es gemäß einer dritten Ausführungsform vorteilhaft, wenn der erste Bewegungsbereich durch eine Dichtung gebildet ist, die axial zwischen dem Filterelement und dem Gehäuseboden liegt, wobei diese Dichtung sich auch radial an die sich axial erstreckenden Gehäusewand, zur Bildung des zweiten Bewegungsbereichs, erstreckt.

Alternativ ist es auch möglich, dass das Kunststoffteil, das die erste Dichtung trägt sich radial nach außen über den Rand des Filterelements erstreckt, so dass im Eintritt der zu filternden Flüssigkeit eine Membranfläche gebildet ist, die zusammen mit einem radialen oder axialen Anschlag am Gehäuse teilweise einen Verschluss des Rücklaufs der zu filternden Flüssigkeit in der Art eines Rücklaufventils bewirkt. Gemäß der Erfindung können somit zwei Ventilfunktionen miteinander kombiniert werden, nämlich ein Rücklaufsperrventil mit einer Membran auf einem Kunststoffträger und einem Ablaufsperrventil auf dem gleichen Kunststoffträger.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Ausführungsbeispiele der erfindungsgemäßen Filteranordnung z.B. für Kraft- und/oder Schmierstoffe in einem Kraftfahrzeug, werden anhand der Figuren der Zeichnung erläutert. Es zeigen:
Figur 1 eine Schnittansicht durch ein Ausführungsbeispiel einer Ölfilteranordnung mit einer Membrandichtung,
Figur 2 eine Schnittansicht durch ein Ausführungsbeispiel einer Ölfilteranordnung mit zwei Ringdichtungen,
Figur 3 eine Schnittansicht durch eine Abwandlung des Ausführungsbeispiels nach der Figur 2 und
Figur 4 eine Schnittansicht durch ein Ausführungsbeispiel einer Ölfilteranordnung mit einer einzigen Ringdichtung, die sich radial und axial erstreckt.

### Beschreibung des Ausführungsbeispiels

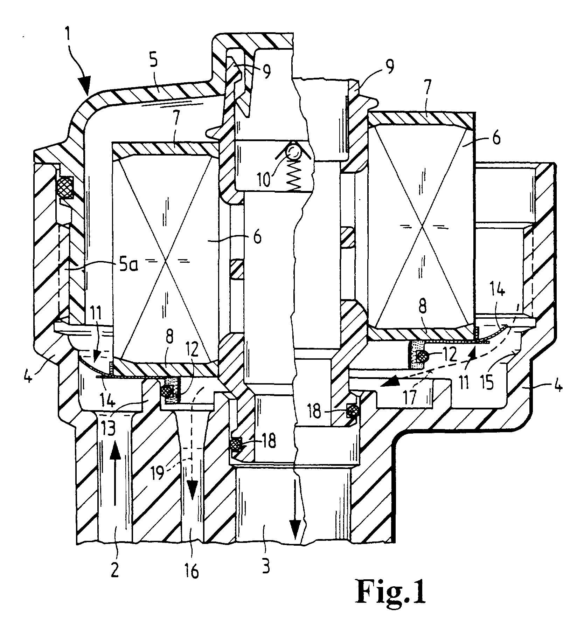

In Figur 1 ist eine Filteranordnung 1 für eine Brennkraftmaschine mit einem Rohflüssigkeitszulauf 2, einem Reinflüssigkeitsablauf 3, einem unteren Gehäuseteil 4 und einem Gehäusedeckel 5 stilisiert gezeigt. In der Filteranordnung 1 befindet sich ein Filterelement 6, das in der Regel aus einem zick-zack-förmig gefalteten Filterpapier, einer oberen Endscheibe 7 und einer unteren Endscheibe 8 gebildet ist. Im linken Teil ist das Filterelement 6 im geschlossenen Gehäuse 4,5 gezeigt und im rechten Teil ist das Filterelement 6 bereits einen Bereich in axialer Richtung herausgezogen.

An dem Gehäusedeckel 5 nach der Figur 1 ist ein Mittelrohr 9 angeordnet, welches über eine Schnappverbindung mit dem Gehäusedeckel 5 verbunden ist. In dem Mittelrohr 9 befindet sich noch ein Überdruckventil 10 in einer an sich aus dem eingangs erwähnten Stand der Technik bekannten Bauart. Der Gehäusedeckel 5 ist im montierten Zustand über eine Schraubverbindung 5a mit dem Gehäuseunterteil 4 flüssigkeitsdicht verbunden.

Das Filterelement 6 besitzt bei diesem Ausführungsbeispiel an der unteren Endscheibe 8 eine Kunststoff- bzw. Elastomerplatte 11 mit der über einen O-Ring 12 eine erste Dichtung an einem axialen Fortsatz 13 des Gehäuses 4 realisierbar ist. Diese Elastomerplatte 11 ist beispielsweise an der unteren Endscheibe 8 angeklebt oder im 2-Komponenten-Herstellverfahren mit dieser Endscheibe verbunden und weist einen membranartigen radialen Fortsatz 14 auf, mit dem im Prinzip eine einteilige Rücklaufsperre oder ein Sperrventil realisierbar ist. Die untere Endscheibe 8 mit dem Fortsatz 14 an der Elastomerplatte 11 liegt im linken montierten Zustand mit ihrem Rand radial an der Innenwandung des Gehäuses 4 an und bildet so die Rücklaufsperre, d. h. sie verhindert bei einem Stillstand des Motors ein Rücklaufen des sich im Rohflüssigkeitsbereich befindenden Rohöls in den Rohflüssigkeitszulauf 2.

Die rechtsseitige Schnittdarstellung der Figur 1 zeigt die Anordnung im axial angehobenen Zustand des Filterelements 6. Hier ist in Abwandlung zur linken Darstellung ein Absatz 15 dazu geeignet, den membranartigen radialen Fortsatz 14 so abzustützen, dass dieser axial auf der Gehäusewand 4 dichtend aufliegen kann. Im Verlauf des axialen Herausziehens des Filterelements 6 wird somit zunächst die erste Dichtung 12 für den Rücklauf der zu filternden Flüssigkeit vom Eintritt 2 in einen Rücklaufkanal 16 gemäß Pfeil 17 freigegeben. Im Verlauf des weiteren axialen Herausziehens des Filterelements 6 mit dem Mittelrohr 9 wird eine zweite Dichtung 18 für den Rücklauf der gefilterten Flüssigkeit gemäß Pfeil 19 freigegeben.

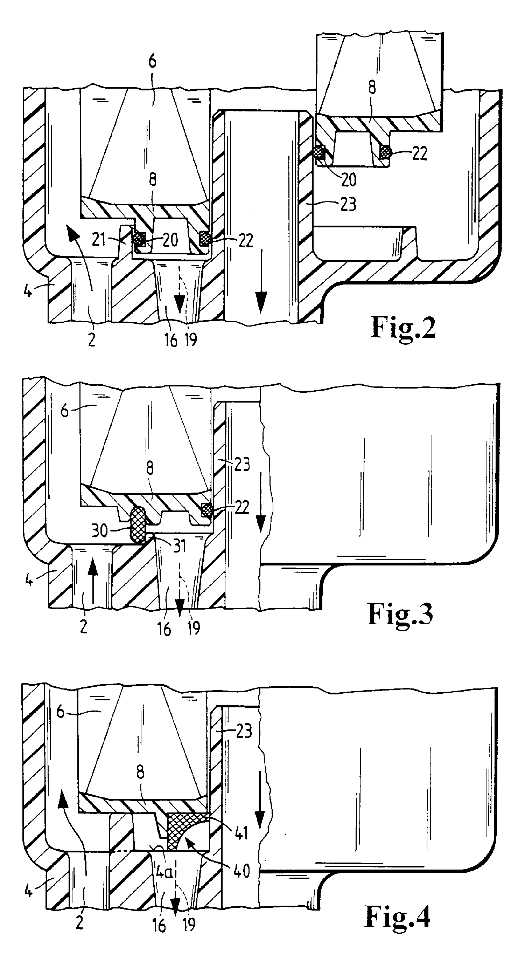

Gemäß eines Ausführungsbeispiels nach Figur 2 ist die erste Dichtung 20 durch einen axialen Fortsatz 21 gebildet, an dem die erste Dichtung anliegt. Dieser Fortsatz 21 liegt im Gehäuse 4 zwischen dem Zulauf 2 der zu filternden Flüssigkeit und dem Rücklaufkanal 16. Die zweite Dichtung 22 ist an einem mit dem Gehäuse 4 fest verankerten Standrohr 23 gebildet.

Beim Ausführungsbeispiel nach Figur 3 ist ein sich axial erstreckender erster Dichtungsring 30 gebildet, der an einem sich axial erstreckenden Fortsatz 31 im Gehäuse 4 zwischen dem Zulauf 2 der zu filternden Flüssigkeit und dem Rücklaufkanal 16 anliegt.

Weiterhin ist es gemäß eines Ausführungsbeispiels nach Figur 4 möglich, dass die erste Dichtung 40 dadurch gebildet ist, dass diese axial zwischen dem Filterelement 6 und dem Gehäuseboden 4a des Gehäuses 4 liegt, wobei diese Dichtung 40 sich auch mit einem radialen Fortsatz 41 an die sich axial erstreckenden Gehäusewand bzw. an das Mittelrohr 23 erstreckt.

## Patentansprüche

1. Filteranordnung für Flüssigkeiten mit
- einem Filterelement(6), das während der Montage der Filteranordnung (1) axial in ein Filtergehäuse (4) einführbar ist, wobei das Filterelement (6) nach der Montage den Verschluss einer Rücklaufvorrichtung (16) mindestens für die zu filternde Flüssigkeit mit mindestens einer Dichtung (12) vor dem Rücklaufkanal bewirkt, **dadurch gekennzeichnet, dass**
- die Rücklaufvorrichtung (16) so gestaltet ist, dass im Verlauf des axialen Herauszeihens des Filterelements (6) zunächst eine erste Dichtung (12;20;30;40) für den Rücklauf der zu filternden Flüssigkeit freigebbar ist und dass
- im Verlauf des weiteren axialen Herauszeihens des Filterelements (6) eine zweite Dichtung (18;22;41) für den Rücklauf der gefilterten Flüssigkeit freigebbar ist.

2. Filteranordnung nach Anspruch 1, **dadurch gekennzeichnet, dass**
- die erste Dichtung (12;20,21;30;40) am Filterelement (6) derart angeordnet ist, dass sie in einem vorgegebenen axialen Bewegungsbereich dichtend an einer Gehäusewand (4) anliegt und dass
- die zweite Dichtung (18;22;41) am Filterelement (6) derart angeordnet ist, dass sie in einem vorgegebenen axialen Bewegungsbereich dichtend an einer sich axial erstreckenden Gehäusewand (4;23) anliegt, wobei der Bewegungsbereich für die zweite Dichtung (18;22;41) länger ist als der erste.

3. Filteranordnung nach Anspruch 2, **dadurch gekennzeichnet, dass**
- der erste Bewegungsbereich durch einen axialen Fortsatz (21), an dem die erste Dichtung (20) anliegt, im Gehäuse (4) zwischen dem Zulauf (2) der zu filternden Flüssigkeit und dem Rücklaufkanal (16) gebildet ist.

4. Filteranordnung nach Anspruch 2, **dadurch gekennzeichnet, dass**
- der erste Bewegungsbereich durch eine sich axial erstreckende erste Dichtung (30) gebildet ist, die an einem sich axial erstreckenden Fortsatz (31) im Gehäuse (4) zwischen dem Zulauf (2) der zu filternden Flüssigkeit und dem Rücklaufkanal (16) anliegt.

5. Filteranordnung nach Anspruch 2, **dadurch gekennzeichnet, dass**
- der erste Bewegungsbereich durch eine Dichtung (40) gebildet ist, die axial zwischen dem Filterelement (6) und dem Gehäuseboden (4) liegt, wobei diese Dichtung (40) sich auch radial (41) an die sich axial erstreckenden Gehäusewand (4,23), zur Bildung des zweiten Bewegungsbereich, erstreckt.

6. Filteranordnung nach Anspruch 2, **dadurch gekennzeichnet, dass**
- die erste Dichtung (11) sich radial nach außen über den Rand des Filterelements (6) erstreckt, so dass im Zulauf (2) der zu filternden Flüssigkeit eine Membranfläche (14) gebildet ist, die ggf. zusammen mit einem Anschlag (15) am Gehäuse (4) teilweise einen Verschluss des Rücklaufs der zu filternden Flüssigkeit bewirkt.

7. Filteranordnung nach einem der vorhergehenden Ansprüche, **dadurch gekennzeichnet, dass**
- die zu filternden Flüssigkeiten die Kraft- und/oder Schmierstoffe für einen Verbrennungsmotor in einem Kraftfahrzeug sind.
